# EUROPEAN PATENT APPLICATION

(11) **EP 4 776 196 A1**
(43) Date of publication of application: **15.07.2026**
(21) Application number: 26150745.3
(22) Date of filing: 08.01.2026
(51) Int. Cl.: G06Q 10/04, A01B 79/00, G06Q 10/0635, G06Q 50/02, G06V 20/10

(54) **SYSTEM AND PROCESS FOR MONITORING AGRICULTURAL CROPS TO ESTIMATE DAMAGE**

(30) Priority: 08.01.2025 IT 202500000132
(71) Applicant: Iselqui Technology S.R.L., 60131 Ancona (AN) (IT); Fiorentini, Marco, 60015 Falconara Marittima (AN) (IT)
(72) Inventor: FIORENTINI, Marco, 60015 Falconara Marittima (AN) (IT); FAVI, Fabrizio, 60033 Chiaravalle (IT); ZINGARETTI, Francesco, 60035 Jesi (IT)
(74) Representative: Lunati & Mazzoni S.r.L.

(57) **Abstract**

A process is provided for monitoring agricultural crops for damage estimation, implemented on a field (10) including a plurality of distinct agricultural production units (100), and comprising periodically, with a predetermined frequency, acquiring images and/or videos including at least one digital reproduction (20) of agricultural production units (100); processing the digital reproduction (20) so as to derive, for each agricultural production unit (100), a piece of processing data; georeferencing each piece of processing data by associating a piece of location data with each processing data to form a respective piece of information data; recording the information data in a database; wherein the processing further comprises identifying in each reproduction fragment (200) a reproduction of one or more external objects (300) overlapping at least partially the agricultural production unit (100); graphically reconstructing a clean fragment (201) from the one or more external objects (300); determining a characteristic data by measuring at least one overall geometric dimension of the agricultural production unit (100) and associating it in the information data with each respective processing data; and wherein the process further comprises numerically and periodically comparing the previously processed characteristic and processing data with the characteristic and processing data of each corresponding piece of information data according to the respective location data; quantifying a damage value whenever the processing and/or characteristic data change; and displaying the damage value.

## Description

The present invention relates to a system and method for monitoring agricultural crops of the type specified in the preamble of the first claim.

In particular, the present invention relates to a monitoring system and method adapted to allow the estimation of damage suffered by agricultural crops, for example due to bad weather or other triggering factors, in order to determine the condition of the agricultural production units, plan any maintenance interventions and, above all, determine the compensation for the damages suffered by insurance agencies.

As is known, climate change and extreme weather events, such as hailstorms, represent a significant threat to agriculture and indeed, for example, in 2024 alone, as many as 664 hailstorms were recorded in Italy.

These weather events may, as is clear, drastically reduce agricultural production or prevent any harvest at all.

Moreover, since these events are sudden and above all unexpected, they represent a very significant economic risk which, at certain times, can complicate the financial life of agricultural enterprises. To counter this relentless and growing pressure, agricultural insurance policies have been introduced to improve risk management and protect businesses from major financial losses.

Agricultural insurance is an important risk management tool for agricultural producers and is becoming increasingly important, both in Europe and in the United States, as an agricultural policy instrument. Revisions to the Common Agricultural Policy are geared towards subsidising insurance premiums and, in fact, Member States receive substantial support from the EU. Despite subsidies and the attention devoted at the Community level, risk management in agriculture and, more specifically, the provision of insurance instruments in Europe is very heterogeneous, so much so that many private entities today offer insurance policies only thanks to the subsidies provided by the European Union.

Furthermore, current damage assessment methods, often based on manual inspections, are subject to inaccuracies and delays, causing financial hardship for farmers and potential legal disputes.

The known technique described therefore comprises major drawbacks, to which must be added the need, currently unmet by systems of the known art, for more accurate and objective tools for assessing crop damage that can considerably improve productivity monitoring, streamline compensation processes, and reduce economic risks for both farmers and insurers.

**In** fact, these financial risk management instruments, in order to be effective, must take into account stakeholders with different perspectives, namely the farmer, the EU, and the insurance agencies.

On the one hand, the farmer must be protected from sudden and severe reductions in production quantity and quality, following the payment of an insurance premium, and in the event of damage must be compensated fairly; the European Union must see a significant increase in such protections in light of the policies through which it is trying to increase the adoption of insurance policies in agriculture, recognising it as a key point in the Community strategy for food production and food security; and finally the insurance agencies which, on the other hand, have the burden and duty to create a virtuous system.

Given that the parties involved have different objectives, there is a growing need to create systems that can on the one hand protect the agricultural enterprise, that is, allowing compensation for the damage suffered, and on the other hand the insurance agency by enabling the determination of the amount of money to be compensated in the event of an agricultural claim.

In this context, the technical task underlying the present invention is to devise a system and method for monitoring agricultural crops for damage estimation capable of substantially overcoming at least part of the aforementioned drawbacks.

Within said technical task, an important object of the invention is to provide a system and method for monitoring agricultural crops that allow improving the efficiency of monitoring the agricultural production units.

Another important object of the invention is to provide a system and method for monitoring agricultural crops for damage estimation that allow accurately estimating the damage suffered by the crops in the event of claims, so that any maintenance actions can be planned.

Thus, a further object of the invention is to provide a system and method for monitoring agricultural crops for damage estimation that allow automatically facilitating the compensation process to reduce the financial risk to which an agricultural enterprise may be exposed in the face of unexpected events, such as bad weather, that affect the crops.

In conclusion, a further object of the invention is to provide a system and method for monitoring agricultural crops for damage estimation that are an effective tool usable both by the farmer and by the insurance companies in compliance with the policies promoted within the EU.

The technical task and the specified objects are achieved by a system, and the related process, for monitoring agricultural crops for damage estimation as claimed in the appended claim 1.

Preferred technical solutions are highlighted in the dependent claims.

The characteristics and advantages of the invention are clarified below by the detailed description of preferred embodiments of the invention, with reference to the accompanying figures, in which:
**Fig. 1** shows a schematic view of the system, and the related process, for monitoring agricultural crops for damage estimation according to the invention; and
**Fig. 2** illustrates an example of processing a digital reproduction implemented through a system, and the related process, for monitoring agricultural crops for damage estimation according to the invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results from the following discussions, terms such as "processing", "computer science", "determination", "calculation", or the like are understood to refer to the action and/or processes of a computer or similar electronic computing device that manipulates and/or transforms data represented as physical quantities, such as electronic quantities of registers of a computer system and/or memories, into other data similarly represented as physical quantities within computer systems, registers or other devices for storing, transmitting or displaying information.

The measurements and data reported in this text are to be considered, unless otherwise indicated, as performed in the International Standard Atmosphere ICAO (ISO 2533:1975).

With reference to the Figures, the agricultural crop monitoring system according to the invention is globally denoted by the number **1.**

The system 1 is adapted to allow the management of an agricultural field **10.** The field 10 is comparable to a plot of land confined within a predetermined area. Moreover, the field 10 includes a plurality of distinct agricultural production units **100.**

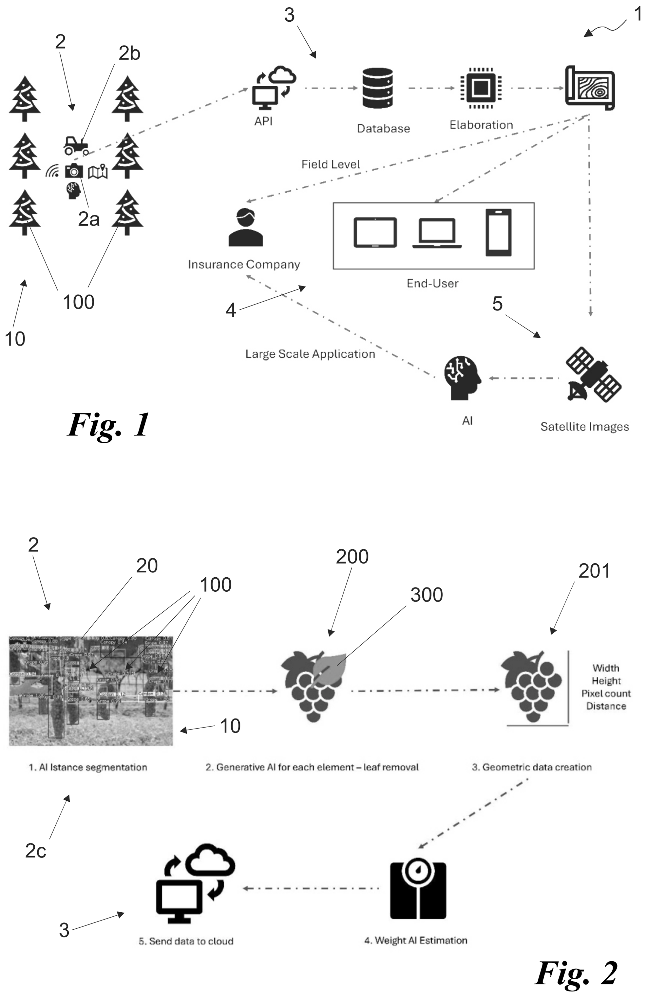

The agricultural production units 100 are preferably constituted by distinct agricultural products present in the field 10. For example, the agricultural production units 100 may correspond to individual plants. Or, if the field 10 is constituted by a vineyard, the agricultural production unit 100 may be constituted by a grape cluster, as for example shown in Fig. 2. Naturally, in other examples, the agricultural production units 100 may include ears of corn, apples, or other products.

The system 1 further comprises acquisition means **2.**

The acquisition means 2 are adapted to allow the acquisition of images and/or videos. In particular, suitably, the acquisition means 2 acquire images and/or videos relating to the field 10 or to portions of the field 10 in such a manner as to capture one or more agricultural production units 100.

In particular, the acquisition means 2 may comprise one or more of at least one static device 2a and at least one mobile device 2b. Moreover, preferably, the acquisition means 2 comprise an optical apparatus 2c. The optical apparatus 2c may include, or be constituted by, a camera or a video camera or other similar instruments adapted to carry out the acquisition.

The optical apparatus 2c is therefore associable and specifically fixed, for example integrally, to the static device 2a or to the mobile device 2b.

The static device 2a may include, or be constituted by, a fixed element positioned at a fixed position of the field 10. For example, the static device 2a may simply include a support, for example a pole, fixed to the field 10 to which the optical apparatus 2c is constrained.

The mobile device 2b, instead, may include, or be constituted by, a mobile vehicle, for example a ground vehicle such as a tractor, or also an airborne vehicle, such as a drone, or another device. Therefore, also in this case, the optical apparatus 2c may be constrained to the mobile device 2b in such a way as to be movable across the field 10 and allow the acquisition of different areas.

Preferably, the acquisition means 2, regardless of their type, are operatively connected to a GPS locator. In this way, it is possible to know the position of the acquisition means 2 and, as better explained hereinafter, also of the various agricultural production units 100 detected.

Indeed, the acquisition means 2 also preferably comprise at least one measuring instrument. The measuring instrument is configured to measure the distance between the acquisition means 2 and at least one agricultural production unit 100. In particular, for example, the measuring instrument may include one or more selected from among LIDAR, TOF and depth sensor.

Therefore, thanks to the GPS locator and the measuring instrument, it is possible to determine the position of the agricultural production units 100 in the field 10.

The system 1 further comprises processing means **3.**

The processing means 3 substantially include at least one electronic processor capable of exchanging digital data with the outside and manipulating it in order to make it usable. It is important to underline that, in the present text, when referring to processing means 3, it is meant, generically, the processing part of the system 1 which may be physically implemented by one or more different processors and which may therefore be part of one or more other components of the system 1. For example, a part of the processing means 3 may be integrated into the acquisition means 2 in such a way as to allow the scanning step, better described hereinafter, to be carried out locally within the acquisition means 2.

Moreover, the processing means 3 may include, in addition to processors operatively connected to one another, also components accessible via network and cooperating with the processors, for example cloud databases or other similar storage and processing components.

Preferably, the processing means 3 implement artificial intelligence logics. Therefore, the processing means 3 include at least one algorithm capable of learning, based on the input data, the correct way to process the data in order to achieve the objectives set by the system 1 according to the invention.

The processing means 3 may therefore be connected to a plurality of other devices. For example, the processing means 3 are operatively connected to a database. In particular, the database may be integrated within the processing means 3 or, more appropriately, may be connected to the processing means 3 via the internet or other protocols.

Moreover, preferably, the processing means 3 are operatively connected with an interface **4.** The interface 4 is substantially an electronic output device and therefore allows a user to at least view the data obtained from the system 1. In general terms, the interface 4 comprises at least one display capable of showing the results obtained.

However, the interface 4 may include, or be constituted by, part of the processing means 3. For example, the interface 4 may be implemented by a computer, a tablet, a smartphone, or another device useful to the user to allow the consultation, at least visual, of data.

The system 1, in addition, may also include a satellite image acquisition apparatus **5.** If present, the satellite image acquisition apparatus 5 is configured to acquire satellite images at least of the field 10.

Moreover, the satellite image acquisition apparatus 5 is operatively connected to the processing means 3 in such a way as to be able to transmit the acquired satellite data to it.

The operation of the system 1 previously described in structural terms allows the implementation of a new process for monitoring agricultural crops.

The process is implemented on a field 10 which therefore includes a plurality of distinct agricultural production units 100.

Moreover, the process comprises a plurality of steps that are carried out periodically at a predetermined frequency, for example, by the processing means 3. In this way, the process constantly updates, or at least once, the acquired data.

In particular, the process comprises an acquisition step. The acquisition is preferably carried out, as mentioned, periodically and with a predetermined frequency, for example, by the processing means 3.

**In** the acquisition step, preferably, images and/or videos are acquired through the acquisition means 2. The images and/or videos thus include at least one digital reproduction **20** of the agricultural production units 100. The digital reproduction 20 therefore corresponds to the visual reproduction, on digital media, of the agricultural production units 100 framed by the acquisition means 2.

The process thus comprises a processing step.

The processing step is also preferably carried out, as mentioned, periodically and with a predetermined frequency, for example, by the processing means 3.

**In** particular, the processing provides that the digital reproduction 20 is processed by the processing means 3 to obtain a processing data. As already stated, in a preferred embodiment, the part of the processing means 3 assigned to the processing of the digital reproduction 20 is preferably integrated into the scanning means 2.

The processing data is derived for each agricultural production unit 100. Therefore, from the processing step, a plurality of processing data is extracted, each associated with a respective agricultural production unit 100 present in the digital reproduction 20.

In detail, preferably, the processing comprises sub-steps.

Indeed, suitably, the processing comprises a segmentation sub-step. The segmentation is carried out on the digital reproduction 20. Even more in detail, in the segmentation step, the digital reproduction 20 is segmented so as to individually distinguish each agricultural production unit 100 into a respective reproduction fragment **200.** The reproduction fragment 200 is thus a part of the digital reproduction 20 referring to a single respective agricultural production unit 100.

The processing thus also comprises an association sub-step.

In the association sub-step, preferably, a piece of depth data is associated with each reproduction fragment 200. The depth data is substantially useful for allowing the localisation of the agricultural production unit 100 corresponding to the reproduction fragment 200 in relation to the acquisition means 2.

Indeed, preferably, the depth data comprises at least one distance between the acquisition means 2 and a respective agricultural production unit 100.

This distance may be, as mentioned, measured with the measuring instrument. Moreover, the processing further comprises a recognition sub-step.

In the recognition sub-step, preferably, a type of agricultural production unit 100 present in the reproduction fragment 200 is recognised.

Preferably, the recognition is carried out by using at least one instance segmentation algorithm which allows locating and classifying the objects 100 in the reproduction fragment 200. Suitably, the recognition provides for recognising a type of each agricultural production unit 100 by using the instance segmentation algorithm on the single reproduction fragment 200 and/or on the entire digital reproduction 20. Moreover, preferably, the algorithm is employed from the database which, as mentioned, is operatively connected with the processing means 3 and thus accessible by them.

More in detail, preferably, following the acquisition of the reproduction fragment 200, the instance segmentation may be performed by executing algorithms, for example, of the YOLO, Mask R-CNN, Faster R-CNN or Transformer type, which allow locating and classifying objects (clusters, leaves, branches) within the reproduction fragment 200.

Alternatively, the recognition may also be carried out, more basically, by graphical comparison of the reproduction fragment 200 with digital images of agricultural production units 100. These latter may be stored in the database.

Naturally, the recognition sub-step may be carried out after the segmentation on the reproduction fragment 100, or also before the segmentation by identifying in the digital reproduction 20 the agricultural production units 100 intended to be segmented into reproduction fragments 200.

These sub-steps of the processing step may in any case be carried out, as already mentioned, in accordance with instance segmentation processes already known to the person skilled in the art.

The process thus comprises a georeferencing step.

Georeferencing is preferably carried out periodically with a predetermined frequency, for example, by the processing means 3.

In the georeferencing step, preferably each processing data, which includes the reproduction fragment 200 with the associated depth data, is georeferenced by means of the GPS locator.

Preferably, as already stated, the georeferencing takes place by locating the acquisition means 2 and thus calculating the distance between the latter and the agricultural production unit 100 present in the reproduction fragment 200.

Georeferencing preferably therefore also includes the association of a piece of location data with each processing data. The combination of processing data and location data thus forms a respective information data.

The process thus comprises a recording step.

The recording step is also preferably carried out periodically at a predetermined frequency, for example, by the processing means 3.

In the recording step, preferably, the information data are recorded on the database by the processing means 3.

Since the reproduction fragments 200 include images of agricultural production units 100 and since the latter are exposed to the external environment, it may occur that the agricultural production units 100 are at least partially covered by one or more external objects **300.** The external objects 300 may be, for example, animals placed on part of the agricultural production unit 100, or foliage or other vegetation overlapping at least part of the agricultural production unit 100.

The processing therefore comprises some additional sub-steps to allow the acquisition of correct data also in the presence of such situations.

In particular, the processing also comprises an identification sub-step.

In the identification step, preferably, in each reproduction fragment 200 a reproduction of one or more external objects 300 overlapping at least partially the agricultural production unit 100 is identified.

The identification for the removal of the external objects 300 may, in detail, be carried out by means of an artificial intelligence algorithm, but other similar technologies known to the skilled person may also be used.

More specifically, for each reproduction fragment 200, cropping is carried out on that section of the image which will then pass through a GAN (generative adversarial network) algorithm that allows identifying the presence or absence of the object 300 on the agricultural production unit 100 of the reproduction fragment 200, i.e., for example, the presence or absence of leaves covering the cluster.

The processing thus further comprises a reconstruction sub-step.

In the reconstruction sub-step, preferably, a clean fragment **201** is graphically reconstructed from the reproduction fragment 200 by removing the one or more external objects 3.

Thus, the clean fragment 201 is nothing more than the reproduction fragment 200 in which the one or more external objects 300 that may obstruct the correct digital display of the agricultural production unit 100 are removed and replaced by reconstructed portions of the representation of the complete agricultural production unit 100.

The processing also comprises a determination sub-step.

In the determination sub-step, preferably, a characteristic data of the agricultural production unit 100 is determined.

The characteristic data is data relating to the physical and/or geometric characteristics of the agricultural production unit 100.

Preferably, the characteristic data is determined by measuring at least one overall geometric dimension of the agricultural production unit 100. The measurement is suitably and advantageously carried out starting from the clean fragment 201.

Moreover, advantageously, the measurement is carried out by weighing the clean fragment 201 against the respective depth data. This means that, naturally, the geometric dimensions effectively derivable from the analysis of the clean fragment 201 depend on the relative distance between the acquisition means 2 and the agricultural production unit 100, the latter obviously appearing, with equal size, larger when close to the acquisition means 2 and smaller when distant from the acquisition means 2.

In particular, for example, for each individual clean fragment 201 reconstructed, preferably by the GAN, it is possible to calculate the number of pixels that make up said clean fragment 201 and thus the height, the width, and optionally also the depth (thanks to the depth sensor - LIDAR - TOF). Therefore, the depth, which is part of the processing data indicating the distance between the acquisition means 2 and a respective agricultural production unit 100, can be equivalently evaluated starting from the reproduction fragment 200 or from the clean fragment 201.

Preferably, the processing further comprises an additional association sub-step.

In the further association sub-step, preferably, the characteristic data is associated with each respective processing data, thus also including the characteristic data in the respective information data.

It should be noted that the characteristic data may be enriched with further information. Indeed, for example, the database may include density data each associated with a respective type of agricultural production unit 100. Thus, once the agricultural production unit 100 is recognised, the processing means 3 can also obtain the density data associated with the agricultural production unit 100 present in the reproduction fragment 200 and the clean fragment 201.

Therefore, the determination sub-step of the characteristic data may also estimate an overall weight of the agricultural production unit 100 starting from the respective density data and the overall geometric dimension.

Also in this case, the estimation may be carried out by means of a machine learning algorithm, for example XGBoost, but other similar technologies known to the person skilled in the art may also be used.

In a preferred embodiment, all processing and characteristic data are used, for example, by an algorithm such as XGBoost or Random Forest or Feed Forward Neural Network in order to perform the weight estimation.

The process also advantageously comprises a comparison step.

The comparison step is also preferably carried out periodically with a predetermined frequency, for example, by the processing means 3.

In the comparison step, preferably, the characteristic and processing data are compared with the characteristic and processing data previously processed over time. Naturally, the characteristic and processing data of each said corresponding piece of information data are compared based on the respective location data. This means, in other words, that the process checks whether the agricultural production units 100 recognised at a different acquisition time are still positioned in the same location, for example at the same height, presenting the same distance from the acquisition means 2 and whether they exhibit similar physical-geometric characteristics, that is, whether they have, for instance, been partially damaged due to claims or other events.

Thus, the process is capable of determining whether, for example, following hail or another event, one or more agricultural production units 100 have fallen to the ground or have been partially compromised and no longer exhibit the same previous characteristics.

The process further comprises a quantification step.

The quantification step is advantageously carried out whenever the processing data and/or the characteristic data are numerically modified with respect to previously detected processing data and/or characteristic data. In particular, in the quantification step, the damage value is quantified overall on the basis of the information data.

Thus, the process is capable of performing a numerical estimation of the damage that may have occurred due to a harmful weather event.

The process also comprises a display step. In the display step, advantageously, at least the damage value is shown to the user via the interface 4 when the user accesses the interface 4 or otherwise upon request by the user.

Naturally, the damage value is the most significant data for the user, but not the only one useful for correctly monitoring the field 10.

For this reason, the process preferably also comprises a generation step.

The generation step is preferably carried out when the user accesses the interface 4. However, the generation step may also be carried out periodically with a predetermined frequency, for example, by the processing means 3.

In the generation step, in detail, a map of the field 10 is graphically generated. Naturally, the map is of the digital type and viewable through the interface 4.

Thus, the map reports at least the damage values advantageously distributed based on the respective location data. Alternatively or additionally, the map may also report the characteristic data of each piece of information data dislocated based on the respective location data.

Thus, on the map it is possible to understand in which areas of the field 10 events occurred that impacted the configuration of the agricultural production units 100 and possibly to know the detailed status of such agricultural production units 100.

The process may also comprise additional steps.

For example, the process may comprise an additional acquisition step. This is preferably carried out periodically and with a predetermined frequency, for example, by the processing means 3.

In the additional acquisition step, preferably a satellite image of the field 10 and of the acquisition means 2 is acquired. The acquisition is carried out, in this case, also through the satellite image acquisition apparatus 5 operatively connected to the processing means 3.

The process thus comprises an additional comparison step. This additional comparison is also carried out periodically and with a predetermined frequency, for example, by the processing means 3.

The additional comparison involves the graphical comparison of the satellite image with a previously acquired satellite image so as to determine distributed digital graphic variations in the field 10 of the agricultural production units 100. Thus, the satellite images are compared to check whether graphically evident modifications of the status of the field 10 are detectable.

The process therefore comprises an additional association step. This step is also preferably carried out periodically with a predetermined frequency, for example, by the processing means 3.

In the additional association step, preferably, each distributed digital graphic variation is associated with a respective corresponding distributed damage value according to the location data. Thus, the process links the damage quantification data to the graphical modification detectable from the satellite images.

In conclusion, the process preferably also comprises an additional recording step. This step is preferably carried out periodically with a predetermined frequency, for example, by the processing means 3.

The additional recording step provides for recording the distributed digital graphic variations and the associated distributed damage values on the database.

If the process also comprises the acquisition of satellite images, it may be part of a training process of the processing means 3.

Indeed, as already mentioned, the latter may implement artificial intelligence logics. The training process may therefore comprise the monitoring process just described. In addition to this, the training process preferably comprises at least one supply step and one validation step.

In the supply step, preferably, the distributed digital graphic variations and the associated distributed damage values are supplied to the processing means 3 from the database in such a way that the processing means 3 develop an evaluation logic by which to trace back to an estimated damage value starting from the digital graphic variation. Thus, the data derived from the monitoring process may provide the processing means 3 with the data set through which to perform the training.

Then, in the validation step, advantageously, the evaluation logic is validated by comparing the estimated damage value with the actual damage value.

The monitoring and/or training process just described is preferably carried out by the system 1. More generally, the monitoring and/or training process is preferably implemented by means of a computer.

In conclusion, the invention also comprises a computer-readable storage medium comprising instructions which, when executed by said processor, enable the processor to perform the monitoring and/or training process.

The system 1 and the process for monitoring agricultural crops according to the invention achieve significant advantages.

Indeed, the system and process for monitoring agricultural crops allow improving the efficiency of monitoring the agricultural production units.

Moreover, the system 1 and the process for monitoring agricultural crops allow accurately estimating any damage occurred to the crops in the event of claims, so that any maintenance actions can be planned and, above all, to provide useful information to determine the amount of financial compensation by a potential insurance policy.

Thus, the system 1 and the process for monitoring agricultural crops allow automatically facilitating the compensation process in order to reduce the financial risk that an agricultural enterprise may face in the event of unexpected events, such as bad weather, affecting the crops.

In conclusion, the system 1 and the process for monitoring agricultural crops provide a tool effectively usable both by the farmer and by the insurance companies, in compliance with the policies promoted within the EU.

The invention is susceptible of variants falling within the scope of the inventive concept defined by the claims.

In this context, all the details can be replaced by equivalent elements and the materials, shapes and dimensions can be of any type.

## Claims

1. Agricultural crop monitoring process for damage estimation, implemented on a field (10) including a plurality of distinct agricultural production units (100), and including periodically, with a predetermined frequency:
- acquiring through acquisition means (2) images and/or videos including at least one digital reproduction (20) of said agricultural production units (100),
- processing by processing means (3) said digital reproduction (20) so as to derive, for each said production unit (100), a piece of processing data:
- segmenting said digital reproduction (20) so as to individually distinguish each said agricultural production unit (100) into a respective reproduction fragment (200),
- associating a piece of depth data with each said reproduction fragment (200) including at least one distance between said acquisition means (2) and a respective said agricultural production unit (100),
- recognizing a type of each said agricultural production unit (100) by using at least one instance segmentation algorithm on said reproduction fragment (200) and/or said digital reproduction (20) from a database operationally connected with said processing means (3);
- georeferencing each said piece of processing data via a GPS locator by associating a piece of location data with each said piece of processing data to form a respective piece of information data;
- recording through said processing means (3) said information data in said database;
and **characterised in that:**
- said processing further includes:
- identifying in each reproduction fragment (200) a reproduction of one or more external objects (300) overlapping at least partially with said agricultural production unit (100),
- graphically reconstructing a clean fragment (201) by removing said one or more external objects (300) from said reproduction fragment (200),
- determining a characteristic piece of data by measuring at least one overall geometric dimension of said agricultural production unit (100) from said clean fragment (201) weighed against said respective piece of depth data,
- further associating said characteristic data with each respective piece of processing data by including said characteristic piece of data in a said respective piece of information data;
and **in that**
- said process further includes:
- numerically and periodically comparing, with said predetermined frequency, said previously processed characteristic and processing piece of data with said characteristic and processing piece of data of each said corresponding piece of information data according to said respective piece of location data;
- quantifying a damage value, whenever said processing data and/or said characteristic data is numerically modified, based on said information data; and
- showing through an interface (4) operationally networked to said processing means (3) at least said damage value when a user accesses said interface (4).

2. Process according to claim 1, further comprising, at least when a user accesses said interface (4), graphically generating a map of said field (10) showing at least said damage values distributed according to respective said location data and/or said characteristic data of each said piece of information data dislocated according to respective said location data.

3. Process according to any of the preceding claims, wherein said database includes density data each associated with a respective said type of said agricultural production unit (100) and said determination of said characteristic data further includes estimating an overall weight of said agricultural production unit (100) from said respective density data and said overall geometric dimension.

4. Process according to any of the preceding claims, implementing periodically, with said predetermined frequency, said generation and further includes periodically, with said predetermined frequency:
- further acquiring a satellite image of said field (10) and said acquisition means (2) through a satellite image acquisition apparatus (5) operationally connected to said processing means (3),
- further comparing graphically said satellite image with a previously acquired said satellite image so as to determine distributed digital graphic variations in said field (10) of said agricultural production units (100),
- associating each distributed digital graphic variation with a respective said distributed damage value corresponding according to said piece of location data,
- recording said distributed digital graphic variations and said associated distributed damage values on said database.

5. Training process of processing means (3) implementing artificial intelligence logics including a monitoring procedure according to the previous claim, and further:
- providing said processing means (3) with said distributed digital graphic variations and said distributed damage values associated on said database in such a way that said processing means (3) develop an evaluation logic by which to trace an estimated damage value from said digital graphic variation,
- validating said evaluation logic by comparing said estimated damage value with said damage value.

6. System (1) for monitoring agricultural crops for damage estimation, comprising means for implementing a process according to any one of the preceding claims.

7. System (1) according to the preceding claim, wherein said acquisition means (2) are operationally connected to said GPS tracker and include:
- one or more of a static device (2a) placed at a fixed position of said field (10), and a mobile device (2b) with respect to said field (10), and
- at least one optical equipment (2c) integral to said static device (2a) or said mobile device (2b).

8. System (1) according to the preceding claim, wherein said acquisition means (2) comprise at least one measuring instrument of said distance including one or more selected from among LIDAR, TOF, and depth sensor.

9. Computer program comprising instructions which, when the program is executed by said processor, enable said processor to perform a process according to any of claims 1-5.

10. Computer-readable storage medium comprising instructions that, when executed by said processor, enable said processor to perform a process according to any of claims 1-5.
